Europäisches Patentamt

European Patent Office

Office européen des brevets

(11) Veröffentlichungsnummer: **0 042 519**
**B1**

## (12) EUROPÄISCHE PATENTSCHRIFT

(45) Veröffentlichungstag der Patentschrift:
**18.05.83**

(21) Anmeldenummer: **81104340.5**

(22) Anmeldetag: **05.06.81**

(51) Int. Cl.³: **B 01 J 8/18, C 01 B 17/77**

(54) Verfahren zur Temperaturregelung exothermer Reaktionen durch Überhitzung von Wasserdampf.

(30) Priorität: **19.06.80 DE 3022800**

(43) Veröffentlichungstag der Anmeldung:
**30.12.81 Patentblatt 81/52**

(45) Bekanntmachung des Hinweises auf die Patenterteilung:
**18.05.83 Patentblatt 83/20**

(84) Benannte Vertragsstaaten:
**BE CH DE FR GB IT LI NL SE**

(56) Entgegenhaltungen:
**DE-A-2 502 274**
**DE-A-2 651 567**
**DE-B-1 116 644**
**FR-A-1 312 785**
**GB-A- 740 567**
**US-A-2 735 743**

(73) Patentinhaber: **BAYER AG, Zentralbereich Patente, Marken und Lizenzen, D-5090 Leverkusen 1, Bayerwerk (DE)**

(72) Erfinder: **Wieschen, Hermann, Hufelandstrasse 69, D-5000 Köln 80 (DE)**

## Verfahren zur Temperaturregelung exothermer Reaktionen durch Überhitzung von Wasserdampf

Die vorliegende Erfindung betrifft ein Verfahren zur Temperaturregelung exothermer Reaktionen mittels Wasserdampfüberhitzung, wobei der Wasserdampf in mehreren Folgen im Zwangsdurchlauf zwischen Wärmespeicher und Reaktionsraum geführt wird.

Der üblichen Methode der Abführung von chemischer Prozesswärme mit sogenannten Abhitzekesseln, deren Verdampfer im Reaktionsraum oder den anschliessenden Produktwegen angeordnet sind, ist dann eine Grenze gesetzt, wenn eine genaue Einhaltung bestimmter Temperaturen bei gleichzeitig starken Schwankungen des Wärmeanfalles gefordert wird, oder die Verdampfungstemperaturen unterhalb des Taupunktes korrosiver Medien liegen.

Das erfindungsgemässe Verfahren ist generell für solche Prozesse geeignet und erlaubt eine sehr genaue Temperaturregelung. So kann z.B. die stark exotherme Umwandlung von Methanol in Kohlenwasserstoffe im Wirbelbett mit dem erfindungsgemässen Verfahren gut temperaturgeregelt werden.

Ein weiteres Beispiel für das gemeinsame Auftreten solcher erschwerender Bedingungen ist die sulfatisierende Röstung sulfidischer Erze, bei der die in Mischkonzentraten vorhandenen Cu- und Zn-Sulfide in lösliche Sulfate, der ebenfalls vorhandene Pyrit dagegen in unlösliches $Fe_2O_3$ überführt werden soll, wozu eine genaue Temperaturführung je nach Art des Konzentrates im Bereich von 620–670°C erforderlich ist. Durch wechselnde Konzentratzusammensetzung ist die dabei abzuführende Wärme schwankend. Bedingt durch das mit der Röstluft und der Haftfeuchte des Erzes eingebrachte Wasser und den zur Sulfatisierung erforderlichen $SO_3$-Partialdruck ergeben sich Schwefelsäuretaupunkte bis zu 300°C.

Ähnliche korrosive Verhältnisse herrschen bei der nasskatalytischen Kontaktierung von $SO_2$-haltigen Gasen.

Aber selbst unter nicht korrosiven Bedingungen, wie zum Beispiel bei der Katalyse von trockenen, $SO_2$-haltigen Gasen im Wirbelbett, ist ein Verdampfer als Regelheizfläche nicht geeignet, vor allem dann, wenn, wie in Aufarbeitungsanlagen, die Konzentrationen oder Mengen schwankend sind. Das erfindungsgemässe Verfahren ist in besonderer Weise zur Temperaturregelung katalytischer Reaktionen, insbesondere der $SO_2$-Katalyse zu $SO_3$, in Wirbelbetten geeignet. Unter Wirbelbetten werden sowohl Fliessbetten ohne oder mit Austrag bzw. Kreislaufführung der Wirbelmasse verstanden.

Den Anforderungen unter den vorgenannten Bedingungen wird erfindungsgemäss dadurch entsprochen, dass als Kühlmedium ein Dampf entsprechender Temperatur zur Verfügung gestellt wird. Diesen Kühldampf ohne Anordnung eines Verdampfers im Reaktionsraum oder Produktweg, welches die einzigen Wärmequellen der angesprochenen Prozesse sind, trotzdem aus eigener Prozesswärme zu erzeugen, ist Aufgabe dieses Vorschlages.

Gegenstand der vorliegenden Erfindung ist daher ein Verfahren zur Temperaturregelung exothermer Reaktionen durch Überhitzung von Wasserdampf, welches dadurch gekennzeichnet ist, dass als Kühlmedium Wasserdampf aus einem vom Reaktionsraum getrennt angeordneten, mit siedendem Wasser gefüllten Gleichdruck-Wärmespeicher entnommen, im Zwangsdurchlauf in mehreren Folgen in den Reaktionsraum geführt, dort überhitzt und jeweils anschliessend im Wärmespeicher durch indirekte Verdampfungskühlung rückgekühlt wird, wobei im Wärmespeicher der Wasserdampf auf gleichem Druck gehalten wird, indem die Anzahl der Überhitzungs- und Rückkühlfolgen so gewählt wird, dass das Verhältnis der Summe der Enthalpiedifferenzen der Rückkühlstufen zur Enthalpiedifferenz zwischen Sattdampf und zugeführtem Speisewasser mindestens 1,1 beträgt.

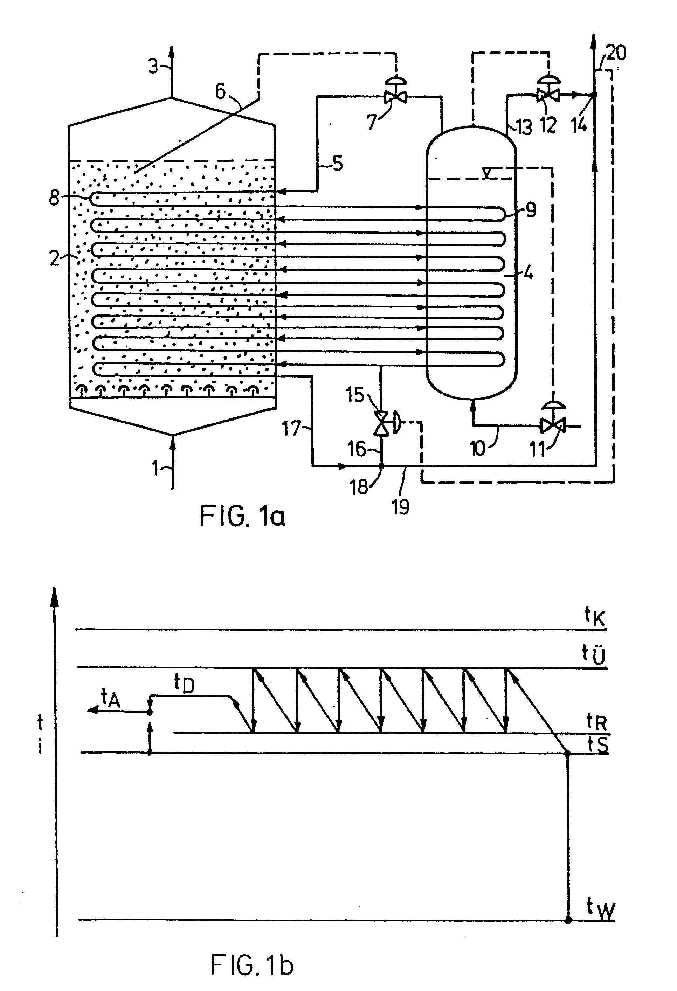

Das vorgeschlagene System besteht aus im Reaktionsraum oder den Produktwegen angeordneten Überhitzungsheizflächen und einem ausserhalb des Reaktionsraumes oder der Produktwege angeordneten, indirekt aufgeladenem Gleichdruck-Wärmespeicher, wie es in Fig. 1a dargestellt ist.

Darin bedeuten:

1  Eintritt des Reaktionsgases
2  Wirbelbett-Reaktor
3  Austritt des Reaktionsgases
4  Wärmespeicher
5  Zuleitung für Kühldampf
6  Temperaturfühler
7  Temperatur-Regelventil
8  Überhitzerstufen im Wirbelbett
9  Rückkühlstufen im Wärmespeicher
10 Speisewasserzuführung zum Wärmespeicher
11 Stand-Regelventil für Speisewasser
12 Druck-Regelventil
13 Abführung von Überschussdampf
14 Mischer
15 Temperatur-Regelventil
16 Bypassleitung
17 Ableitung für Kühldampf
18 Mischer
19 Verbindungsleitung zwischen Mischer 18 und 14
20 Leitung zum Dampfnetz.

Die Funktionsweise ist wie folgt:

Aus dem Wärmespeicher 4 wird über Leitung 5, geregelt durch Temperaturfühler 6 und Ventil 7, Sattdampf entnommen und in mehreren Folgen jeweils in einer der im Wirbelbett 2, mindestens 4, vorzugsweise 6–12, besonders bevorzugt 8–10, angeordneten Überhitzerstufen 8, überhitzt und anschliessend in einer der im Wärmespeicher 4 angeordneten Rückkühlstufen 9 zurückgekühlt.

Gleichgewicht zwischen der dem Speicher 4 in Form von Sattdampf für die Kühlung des Wirbelbettes entzogenen Wärme und der indirekt über die Rückkühlstufen 9 in den Speicher 4 zurückgeführten Wärme ist dann vorhanden, wenn die Summe der Enthalpiedifferenzen des in den Rückkühlstufen 9 zurückgekühlten Dampfes gleich der Enthalpiedifferenz zwischen dem über Leitung 10 zugeführten Speisewasser und dem über Leitung 5 entnommenen Dampf ist.

Dieses Gleichgewicht wird erfindungsgemäss unabhängig von den gegebenen oder gewählten Dampfzuständen über die Anzahl der Überhitzungs- und Rückkühlfolgen eingestellt.

Über die Anzahl der Überhitzungs- und Rückkühlfolgen lassen sich jedoch auch beliebige andere Verhältnisse grösser als 1 einstellen. Durch diese erfindungsgemässe Massnahme wird im Wärmespeicher 4 immer mehr Dampf erzeugt als ihm zu Kühlzwecken entnommen wird.

Je grösser das Verhältnis der Summe der Enthal-piedifferenzen des in den Rückkühlstufen zurückgekühlten Dampfes zur Enthalpiedifferenz zwischen Dampf und Speisewasser gewählt wird, um so elastischer reagiert das System auf schwankende abzuführende Wärmemengen.

Der zur Kühlung nicht benötigte Überschussdampf wird über die Leitung 13 druckgeregelt durch Ventil 12 abgegeben.

Um den über Leitung 20 abgegebenen Nutzdampf in dem gewünschten Überhitzungsgrad zu erhalten, wird ein Teil der zur Kühlung des Wirbelbettes verwendeten Dampfmenge nach der letzten der Rückkühlstufen 9 temperaturgeregelt durch Ventil 15 in der letzten der Überhitzerstufen 8 so erhitzt, dass sich nach Zusammenführung der Leitungen 16 und 17 im Mischer 18 und Weiterleitung über Leitung 19 durch Zusammenführen des Kühldampfes mit dem überschüssigen Sattdampf der gewünschte Zustand ergibt.

Die auf dem vorbeschriebenen Wege durchlaufenen Dampfzustände sind in Fig. 1b darge-stellt.

Darin bedeuten:

tw = Speisewassertemperatur
ts = Sattdampftemperatur
tü = Überhitzungstemperatur
tk = Temperatur des Wirbelbettes
tD = Temperatur nach der Überhitzerstufe
tA = Temperatur des abgegebenen Nutzdampfes
i = Enthalpie bei den jeweiligen Temperaturen
tR = Rückkühltemperatur

Das Diagramm zeigt auch deutlich, dass durch Wahl der Anzahl der Überhitzungs- und Rückkühlfolgen der Temperaturbereich des zur Kühlung verwendeten Dampfes beliebig gewählt werden kann.

Insbesondere ist bei kleiner Enthalpiedifferenz in den Stufen bei entsprechender Vergrösserung

der Anzahl der Stufen eine weitestgehende Thermostatisierung von Reaktionsprozessen möglich.

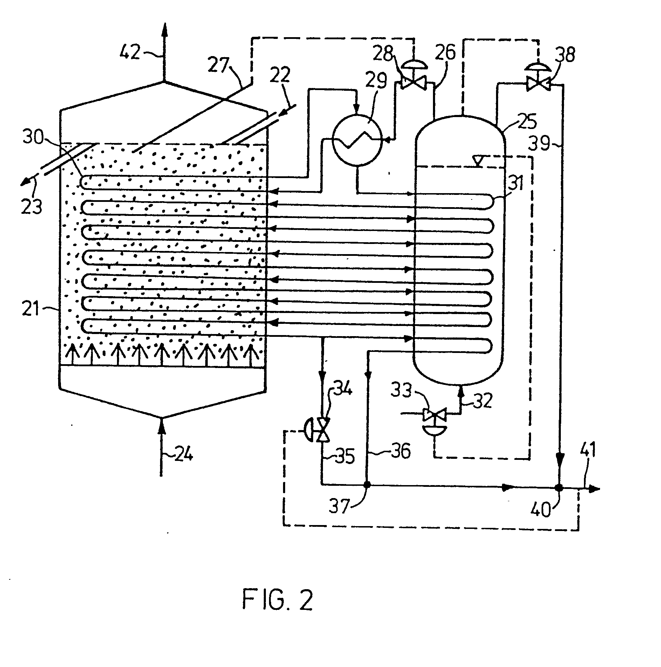

In der Fig. 2 haben die Zahlen folgende Bedeu-tung:

21 Wirbelröster
22 Eintrag
23 Austrag
24 Röstluft-Eintritt
25 Speicher
26 Leitung
27 Temperaturfühler
28 Ventil
29 Wärmeaustauscher
30 Überhitzerstufen
31 Rückkühlstufen
32 Leitung
33 Ventil
34 Ventil
35 Leitung
36 Leitung
37 Mischer
38 Ventil
39 Leitung
40 Mischer
41 Leitung
42 Austritt

Bei der Kühlung korrosiver Medien wird bei sonst gleichem Ablauf der zur Kühlung verwendete Dampf gemäss Fig. 2 vor Eintritt in die erste Überhitzerstufe in dem indirekten Wärmetauscher 29 auf eine Temperatur ausserhalb des korrosiven Bereiches vorgewärmt.

Die Betriebsbereitschaft des Wärmespeichers kann in einfacher Weise, z.B. durch Einblasen von Netzdampf hergestellt werden, sofern dieser zur Verfügung steht. Ist solcher nicht vorhanden, erfolgt die erste Aufladung durch einen in der Figur nicht dargestellten Umlaufverdampfer während des Anheizvorganges mit den gleichen Heizgasen, mit denen das Wirbelbett auf Arbeitstemperatur gebracht wird.

Die Arbeitsweise des erfindungsgemässen Systems der Temperaturführung soll in den folgen-den Beispielen einer $SO_3$-Wirbelkatalyse sowie einer sulfatisierenden Röstung noch näher beschrieben werden.

Beispiel 1

Gemäss Fig. 1a treten 30 000 m³ (bezogen auf den Normalzustand von 0°C und 1,013 bar) je Stunde mit ca. 14 Volumenprozent $SO_2$ und 10 Volumenprozent $O_2$ mit einer Temperatur von 380°C über Leitung 1 in ein Wirbelbett 2 aus Kontaktmasse ein.

Die Temperatur des über Leitung 3 austretenden Reaktionsgases beträgt 480°C. Der katalyti-sche Umsatz zu $SO_3$ ist 93% und die nach Abzug der Verluste durch Kühlung abzuführende Wär-me $13, 12 \cdot 10^6$ kJ/h.

Zur Abführung dieser Wärme werden aus dem Wärmespeicher 4 über Leitung 5, geregelt durch den Temperaturfühler 6 und das Ventil 7 4511 kg Sattdampf von 35 bar und 241,4°C entsprechend einer Enthalpie von 2803 kJ/kg entnommen und in der ersten der Überhitzerstufen 8 auf 440°C, entsprechend einer Enthalpie von 3316 kJ/kg erhitzt.

Anschliessend wird der Dampf in der ersten der im Wärmespeicher 4 angeordneten Rückkühlstufen 9 auf 275°C, entsprechend einer Enthalpie von 2931 kJ/kg rückgekühlt.

Die im Wärmespeicher 4 abgegebene Enthalpiedifferenz von 385 kJ/kg entspricht bei der Dampfmenge von 4511 kg/h der erforderlichen Wärme zur Vorwärmung und Verdampfung von 716 kg/h Speisewasser, welches mit 90°C über Leitung 1, standgeregelt durch Ventil 11, dem Wärmespeicher 4 zugeführt wird.

Im Zwangsdurchlauf werden dann von der gleichen Dampfmenge von 4511 kg/h in 6 weiteren Folgen hintereinander jeweils eine der Überhitzerstufen 8 und eine der Rückkühlstufen 9 durchfahren, wobei der Dampf jeweils von 275°C, entsprechend einer Enthalpie von 2931 kJ/kg auf 440°C, entsprechend einer Enthalpie von 3316 kJ/kg erhitzt und anschliessend auf den Zustand von 275°C rückgekühlt wird.

Durch jede dieser Rückkühlstufen 9 werden weitere 716 kg/h Speisewasser von 980°C auf Siedetemperatur vorgewärmt und verdampft.

Das heisst zusammengefasst, dass im Speicher 4 mit Hilfe von 4511 kg/h überhitztem Dampf der in insgesamt 7 Stufen rückgekühlt wird, 5013 kg/h Sattdampf von 35 bar und 241°C aus einem Speisewasser von 90°C erzeugt werden.

Das Verhältnis der erzeugten Gesamtdampfmenge zu der für die Kühlung des Wirbelbettes 2 verwendeten Dampfmenge beträgt 1,11, das heisst es ist eine 11%ige Regelreserve vorhanden.

Die zur Kühlung des Wirbelbettes nicht benötigte Dampfmenge von 502 kg/h wird als Sattdampf, druckgeregelt durch Ventil 12, über Leitung 13 zum Mischer 14 gegeben.

Um den in einer Menge von 5013 kg/h produzierten Dampf in einem Zustand von 300°C entsprechend einer Enthalpie von 2997 kJ/kg zu erhalten, wird ein Teil der zur Kontaktkühlung verwendeten Dampfmenge nach der letzten, in diesem Fall der 7. Stufe der Rückkühlstufen 9, temperaturgeregelt durch Ventil 15 in einer weiteren, in diesem Fall der 8. Stufe der Überhitzerstufen 8 so erhitzt, dass nach Zusammenführung der Leitungen 16 und 17 hinter dem Mischer 18 eine Temperatur von 309°C entsprechend einer Enthalpie von 3020 kJ/kg erhalten wird.

Dieser Dampf wird über Leitung 19 im Mischer 14 mit dem nicht zur Kontaktkühlung benötigten 502 kg/h Sattdampf zusammengeführt, so dass über Leitung 20 5013 kg/h Dampf von 30 bar 300°C entsprechend einer Enthalpie von 2997 kJ/kg austreten.

Beispiel 2

Gemäss Fig. 2 werden in einem Wirbelröster 21 über den Eintrag 22 ca. 10,5 t/h eines Konzentrates aus sulfidischen Cu-, Zn- und Fe-Erzen eingetragen und das Röstgut bei 23 abgezogen.

Durch den Röstprozess soll der Fe-Anteil in unlösliches $Fe_2O_3$, die Cu- und Zn-Anteile dagegen in lösliche Suflate überführt werden. Dieser selektive Prozess erfordert eine genaue Regelung der Temperatur in diesem Fall auf 650°C.

Die mit der Feuchte der bei 24 eintretenden Röstluft von 24 000 m³ (im Normalzustand, bezogen auf 1,013 bar und 0°C) je Stunde, sowie der Haftfeuchte des bei 22 eintretenden Konzentrates insgesamt eingebrachte Wassermenge beträgt 1 t/h, wodurch sich bei dem zur Sulfatisierung erforderlichen $SO_3$-Partialdruck ein Schwefelsäuretaupunkt von ca. 250°C ergibt.

Die bei diesem Prozess frei werdende Wärme von $32,7 \cdot 10^6$ kJ/h wird wie folgt abgeführt: Aus dem Speicher 25 werden über Leitung 26, geregelt durch Temperaturfühler 27 und Ventil 28, 8000 kg/h Sattdampf von 35 bar und 241°C, entsprechend einer Enthalpie von 2803 kJ/kg entnommen. Weil die Temperatur dieses Dampfes unterhalb des Schwefelsäuretaupunktes liegt, wird er zur Vermeidung von Korrosion vor Eintritt in die erste der Überhitzerstufen 30 im Wärmetauscher 29 auf 280°C vorgewärmt, ehe er auf 500°C, entsprechend einer Enthalpie von 3453 kJ/kg erhitzt wird.

Nach Abgabe einer Enthalpiedifferenz von 141 kJ/kg an dem im Wärmetauscher 29 im Gegenstrom fliessenden Sattdampf, tritt der Dampfstrom in die erste der im Speicher 25 angeordneten Rückkühlstufen 31 ein, wo er unter Vorwärmung und Verdampfung von 1215 kg/h des mit 90°C über Leitung 32, standgeregelt durch Ventil 33 eintretenden Speisewassers auf 280°C, entsprechend einer Enthalpie von 2944 kJ/kg abgekühlt wird.

Im weiteren Zwangsdurchlauf werden dann von der gleichen Dampfmenge von 8000 kg/h in 6 weiteren Folgen hintereinander jeweils eine der Überhitzerstufen 30 und eine der Rückkühlstufen 31 durchfahren wobei der Dampf jeweils von 280°C entsprechend einer Enthalpie von 2944 kJ/kg auf 500°C, entsprechend einer Enthalpie 3453 kJ/kg erhitzt und anschliessend auf den Zustand von 280°C rückgekühlt wird.

Durch die in jeder der Rückkühlstufen 31 abgegebenen Enthalpiedifferenz von 509 kJ/kg werden bei einem Dampfstrom von 8000 kg/h jeweils weitere 1679 kg/h Speisewasser von 90°C auf die Siedetemperatur von 241°C vorgewärmt und verdampft.

Nach Durchlaufen der letzten der insgesamt 8 Überhitzerstufen 30 und Erhitzung auf 500°C wird ein Teil der Dampfmenge, temperaturgeregelt durch Ventil 34, in der letzten der insgesamt 8 Rückkühlstufen so rückgekühlt, dass nach Zusammenführung der Leitungen 35 und 36 sich hinter dem Mischer 37 eine Temperatur von 350°C entsprechend einer Enthalpie von 3112 kJ/kg einstellt.

Durch Abgabe einer Enthalpiedifferenz von 341 kJ/kg werden bie 8000 kg/h in der letzten der insgesamt 8 Rückkühlstufen 31 die restliehcn 1188,8 kg/h der insgesamt 12 476 kg/h des mit 90°C über Leitung 32 in den Speicher 5 eintretenden Speisewassers auf die Siedetemperatur von 241,4°C vorgewärmt und verdampft.

Die zur Kühlung des Wirbelrösters 21 nicht benötigte Sattdampfmenge von 4476 kg/h wird druckgeregelt durch Ventil 38 über Leitung 39 im Mischer 40 mit dem aus Mischer 37 kommenden Dampfstrom von 350°C zusammengeführt, so dass über Leitung 41 12 476 kg/h Dampf mit 300°C entsprechend einer Enthalpie von 2994 kJ/kg bei 42 abgeführt werden.

Das Verhältnis der erzeugten Gesamtdampfmenge zu der für die Kühlung des Wirbelrösters 31 benötigten Dampfmenge beträgt 1,56, womit eine ausreichende Regelreserve für plötzliche Lastüberschreitungen gegeben ist.

Bei Verarbeitung der gleichen Konzentratmenge nach der bisher üblichen Methode der Temperaturregelung durch direkte Wassereinspritzung von ca. 10,5 t/h würde das bei 42 austretende Röstgasvolumen von 21 000 auf ca. 33 000 m³ $_N$/h ansteigen, wodurch neben dem Energieverlust als weiterer Nachteil auch noch eine Vergrösserung des Querschnittes des Wirbelrösters 21 gegenüber dem erfindungsgemässen Verfahren um ca. 50% hingenommen werden müsste.

## Patentansprüche

1. Verfahren zur Temperaturregelung exothermer Reaktionen durch Überhitzung von Wasserdampf, dadurch gekennzeichnet, dass als Kühlmedium Wasserdampf aus einem vom Reaktionsraum getrennt angeordneten, mit siedendem Wasser gefüllten Gleichdruck-Wärmespeicher entnommen im Zwangsdurchlauf in mehreren Folgen in den Reaktionsraum geführt, dort überhitzt und jeweils anschliessend im Wärmespeicher durch indirekte Verdampfungskühlung rückgekühlt wird, wobei im Wärmespeicher der Wasserdampf auf gleichem Druck gehalten wird, indem die Anzahl der Überhitzungs- und Rückkühlfolgen so gewählt wird, dass das Verhältnis der Summe der Enthalpiedifferenzen der Rückkühlstufen zur Enthalpiedifferenz zwischen Sattdampf und zugeführten Speisewasser mindestens 1,1 beträgt.

2. Verfahren nach Anspruch 1, dadurch gekennzeichnet, dass der dem Wärmespeicher entnommene Sattdampf vor Eitnritt in die erste Überhitzerstufe durch indirekten Wärmetausch mit dem aus dieser oder einer der anderen Überhitzerstufen austretenden hoch überhitzten Dampf vorerhitzt wird.

3. Verfahren nach Anspruch 1 oder 2, dadurch gekennzeichnet, dass der Reaktionsraum als Wirbelbett ausgestaltet ist.

4. Verfahren nach einem oder mehreren der Ansprüche 1 bis 3, dadurch gekennzeichnet, dass die exotherme Reaktion eine $SO_2$-Katalyse ist.

5. Verfahren nach einem oder mehreren der Ansprüche 1 bis 3, dadurch gekennzeichnet, dass die exotherme Reaktion eine sulfatisierende Röstung ist.

## Revendications

1. Procédé pour le réglage de la température de réactions exothermiques par surchauffe de vapeur d'eau, caractérisé en ce que l'on envoie en circulation forcée, en plusieurs suites, dans la chambre de réaction, en tant que milieu réfrigérant, de la vapeur d'eau prélevée dans un accumulateur de chaleur à pression égale disposé séparément de la chambre de réaction et rempli d'eau bouillante, la vapeur d'eau étant surchauffée dans la chambre de réaction puis refroidie ensuite à chaque fois dans l'accumulateur de chaleur par refroidissement indirect par vaporisation, la vapeur d'eau étant maintenue dans l'accumulateur de chaleur à la même pression, en ce que le nombre des suites de surchauffe et de refroidissement est choisi en sorte que le rapport de la somme des différences d'enthalpie des étages de refroidissement à la différence d'enthalpie entre la vapeur saturée et l'eau d'alimentation est d'au moins 1,1.

2. Procédé selon la revendication 1, caractérisé en ce que la vapeur d'eau saturée prélevée dans l'accumulateur de chaleur est réchauffée avant entrée dans le premier étage de surchauffeur par échange de chaleur indirect avec la vapeur fortement surchauffée sortant de cet étage de surchauffeur ou de l'un des autres étages de surchauffeur.

3. Procédé selon la revendication 1 ou 2, caractérisé en ce que la chambre de réaction consiste en un lit tourbillonnaire.

4. Procédé selon une ou plusieurs des revendications 1 à 3, caractérisé en ce que la réaction exothermique est une catalyse de $SO_2$.

5. Procédé selon une ou plusierus des revendications 1 à 3, caractérisé en ce que la réaction exothermique est un grillage pour conversion en sulfate.

## Claims

1. A process for controlling the temperature of exothermic reactions by superheating steam, characterised in that steam as a cooling medium is removed from a constant pressure heat accumulator filled with boiling water and positioned apart from the reaction chamber and is guided by force through the reaction chamber in several cycles, is superheated there and is then recooled after each cycle in the heat accumulator by indirect evaporation cooling, whereby the steam is maintained at constant pressure in the heat accumulator, the number of superheating and recooling cycles being selected such that the ratio of the total of the enthalpy differences of the recooling stages to the enthalpy difference between the saturated steam and feed water supplied is at least 1.1.

2. A process according to claim 1, characterised in that the saturated steam removed from the heat accumulator is pre-heated before entering into the first superheating stage by an indirect heat exchange with the highly superheated steam issuing from this or from one of the other superheating stages.

3. A process according to claim 1 or 2, characterised in that the reaction chamber is designed as a fluidized bed.

4. A process according to one or more of claims 1 to 3, characterised in that the exothermic reaction is an $SO_2$-catalysis.

5. A process according to one or more of claims 1 to 3, characterised in that the exothermic reaction is a sulphatising roasting process.

FIG. 1a

FIG. 1b

FIG. 2